# EUROPÄISCHE PATENTANMELDUNG

(11) **EP 1 083 088 A2**
(43) Veröffentlichungstag der Anmeldung: **14.03.2001**
(21) Anmeldenummer: 00119076.8
(22) Anmeldetag: 02.09.2000
(51) Int. Cl.: B60Q 1/076, B60Q 1/068

(54) **Fahrzeugscheinwerfer**

(30) Priorität: 10.09.1999 DE 19943257
(71) Anmelder: Hella KG Hueck & Co., 59552 Lippstadt (DE)
(72) Erfinder: Heitjohann, Peter, 33378 Rheda-Wiedenbrück (DE); Schulte, Jürgen, 33142 Büren (DE)

(57) **Zusammenfassung**

Fahrzeugscheinwerfer mit einem um eine horizontale und um eine vertikale Achse in einem Gehäuse (1) verschwenkbaren Reflektor (2), der in zwei auf einer Achse in einem Abstand zueinander angeordneten manuell verstellbaren Lagerpunkten (4,5) und einem festen Lagerpunkt (6), der mit einem der manuell verstellbaren Lagerpunkte (5) auf der anderen Achse angeordnet ist, gelagert wird, wobei die beiden manuell verstellbaren Lagerpunkte (4,5) über Einstellräder (19), die mit auf Schraubenspindeln (21,22) angeordneten Antriebsrädern (20) verbindbar sind, verstellbar sind und wobei die manuell verstellbaren Lagerpunkte (4,5) als Lagerpunkte einer Verstelleinheit (3) ausgebildet sind, die an dem Gehäuse (1) befestigbar ist.

## Beschreibung

Die Erfindung betrifft einen Fahrzeugscheinwerfer mit einem um eine horizontale und um eine vertikale Achse in einem Gehäuse verschwenkbaren Reflektor, der in zwei auf einer Achse in einem Abstand zueinander angeordneten manuell verstellbaren Lagerpunkten und einem festen Lagerpunkt, der mit einem der manuell verstellbaren Lagerpunkte auf der anderen Achse angeordnet ist, gelagert wird, wobei die beiden manuell verstellbaren Lagerpunkte über Einstellräder, die mit auf Schraubenspindeln angeordneten Antriebsrädern verbindbar sind, verstellbar sind.

Aus der DE 198 15 107 A1 ist ein Fahrzeugscheinwerfer bekannt, der einen in einem Gehäuse schwenkbar angeordneten Reflektor aufweist Der Reflektor ist an drei Lagerpunkten gelagert, wovon jeweils zwei auf einer gemeinsamen Achse angeordnet sind. Zwei der drei Lagerpunkte sind manuell über eine Schraubenspindel verstellbar ausgebildet. Ein dritter Lagerpunkt ist als Lagerpunkt eines Leuchtweitereglers ausgebildet. Der Reflektor ist zur Leuchtweitenregelung von dem Leuchtweiteregler um eine horizontale Achse verschwenkbar. Zur Einstellung in einer horizontalen Ebene ist der Reflektor manuell um eine vertikale Achse verschwenkbar. Bei der manuellen Verstellung des Reflektors ist der dritte, dem Leuchtweiteregler zugeordnete Lagerpunkt als Festpunkt zu betrachten. Die den Lagerpunkten zugeordneten Einstellelemente sind an dem Gehäuse des Scheinwerfers jeweils für sich befestigt.

Weiterhin ist aus der DE 88 17 167 U ein Scheinwerfer für Kraftfahrzeuge bekannt, der einen verschwenkbar in einem Gehäuse angeordneten Reflektor aufweist Mindestens einer der Lagerpunkte des Reflektors ist über eine Einstellvorrichtung manuell verstellbar.

Die Einstellvorrichtung weist eine Schraubenspindel mit einem Antriebsrad auf, das von einem rechtwinklig zu der Schraubenspindel angeordneten Einstellrad, welches als Kegelrad ausgebildet ist, antreibbar ist. Durch Drehung des Einstellrades mit einem Werkzeug läßt sich so die Schraubenspindel über das Antriebsrad drehen und verschiebt ein Einstellgelenk über einen mit der Schraubenspindel verbundenen Gewindebock.

Nachteilig bei den bekannten Einstellvorrichtungen bzw. Einstellelementen ist, daß sie getrennt jeweils im Scheinwerfergehäuse aufzunehmen sind. Der Gestaltungsspielraum ist so aufgrund der Entformungsrichtung des Gehäusespritzwerkzeuges begrenzt. Komplexe Funktionen lassen sich so nur mit hohem Aufwand realisieren. Die Montage gestaltet sich relativ aufwendig.

Aufgabe der vorliegenden Erfindung ist es daher, die bekannten Fahrzeugscheinwerfer so zu verbessern, daß der Gestaltungsspielraum insbesondere bei der Gehäusefertigung erhöht wird. Zudem soll die Montage trotz komplexer Funktionen sich mit geringem Aufwand realisieren lassen.

Diese Aufgabe wird erfindungsgemäß in Verbindung mit dem Oberbegriff des Anspruches 1 dadurch gelöst, daß die manuell verstellbaren Lagerpunkte als Lagerpunkte einer Verstelleinheit ausgebildet sind, die an dem Gehäuse befestigbar ist.

Dadurch, daß die manuell verstellbaren Lagerpunkte als Lagerpunkte einer gemeinsamen Verstelleinheit ausgebildet sind, ist es möglich, die Verstelleinheit komplett vorzumontieren und so die Montage in das Gehäuse erheblich zu vereinfachen. Dadurch, daß die Verstelleinheit getrennt von dem Gehäuse gefertigt und vormontiert wird, ist ein komplexer Aufbau möglich. Zusatzfunktionen, wie beispielsweise Endanschläge für Einstellgelenke, Halten der Antriebsräder, horizontale und vertikale Einstellung in einer Einheit sind so leicht möglich. Der Gehäuseaufbau und dessen Spritzwerkzeug können vereinfacht werden. Einzelteile lassen sich trotz hoher Passgenauigkeit einfach aufeinander abstimmen. Optimierungen müssen damit nicht am komplizierten Gehäusewerkzeug vorgenommen werden.

Gemäß einer bevorzugten Ausführungsform der Erfindung weist die Verstelleinheit eine Grundplatte auf, die über Fixierstege bzw. Fixierschienen an einer Seitenwandung des Gehäuses positionierbar ist. Die Verstelleinheit ist dabei durch eine Schraube am Gehäuse sicherbar.

Dadurch, daß die Verstelleinheit eine eigene Grundplatte aufweist, auf der die Einstellelemente und mindestens zwei der drei Lagerpunkte angeordnet sind und deren Grundplatte über Fixierstege und der Seitenwand des Gehäuses positionierbar ist, läßt sich die Verstelleinheit bzw. ihre Grundplatte einfach in die Fixierstege der Seitenwand einschieben und braucht lediglich durch eine Schraube gesichert zu werden. Die Montage der Verstelleinheit wird daher erheblich vereinfacht.

Nach einer weiteren bevorzugten Ausführungsform der Erfindung sind die manuell verstellbaren Lagerpunkte als Kugelgelenke ausgebildet, die mit einer entsprechenden Gelenkpfanne des Reflektors zu einem Gelenk verbindbar sind.

Durch die Ausbildung der Lagerpunkte als Kugelgelenke ist eine relativ einfache und problemlose Verbindung des Reflektors mit seinen Lagerpunkten möglich.

Nach einer weiteren bevorzugten Ausführungsform der Erfindung sind die Schraubenspindeln an ihren gegenüberliegenden Enden auf der Grundplatte angeordneten Lagerböcken gelagert. Ein erster verstellbarer Lagerpunkt ist an einem ersten Einstellgelenk angeordnet, das zu einer ersten Schraubenspindel längsverschieblich in der Grundplatte gelagert und über einen ersten Gewindebock mit der ersten Schraubenspindel verbunden ist. Ein zweiter verstellbarer Lagerpunkt ist dabei an einem zweiten Einstellgelenk angeordnet, das zu einer zweiten Schraubenspindel längsverschieblich an der Grundplatte gelagert und über einen zweiten Gewindebock mit der zweiten Schraubspindel verbunden ist.

Durch die Verwendung von zwei Schraubenspindeln lassen sich die beiden Einstellgelenke bzw. die an ihnen angeordneten Lagerpunkte unabhängig von einander verstellen.

Gemäß einer weiteren bevorzugten Ausführungsform der Erfindung weist das zweite Einstellgelenk eine Aufnahme für einen Leuchtweitenregler auf, dessen Kugelgelenk den zweiten verstellbaren Lagerpunkt bildet. Über die manuelle Einstellung läßt sich so der Reflektor manuell justieren, wobei der Leuchtweitenregler mit eingeschlossen wird.

Nach einer weiteren bevorzugten Ausführungsform der Erfindung weist die Grundplatte Ansätze auf, die in Nuten der etwa senkrecht zu den Schraubenspindeln angeordneten Einstellräder eingreifen und diese in Richtung ihrer Längsachsen zu den Antriebsrädern positionieren. Die Einstellräder werden dabei seitlich in Bohrungen der Seitenwandung des Gehäuses geführt.

Durch die Ansätze der Grundplatte lassen sich die Einstellräder besonders leicht positionieren bzw. montieren. Nach teilweisen Einschieben der Grundplatte in die Seitenwandung des Gehäuses werden die Einstellräder durch die Öffnungen der Seitenwandung gesteckt und durch Einschieben der Grundplatte in ihre vorgesehene Endlage fixiert bzw. positioniert.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

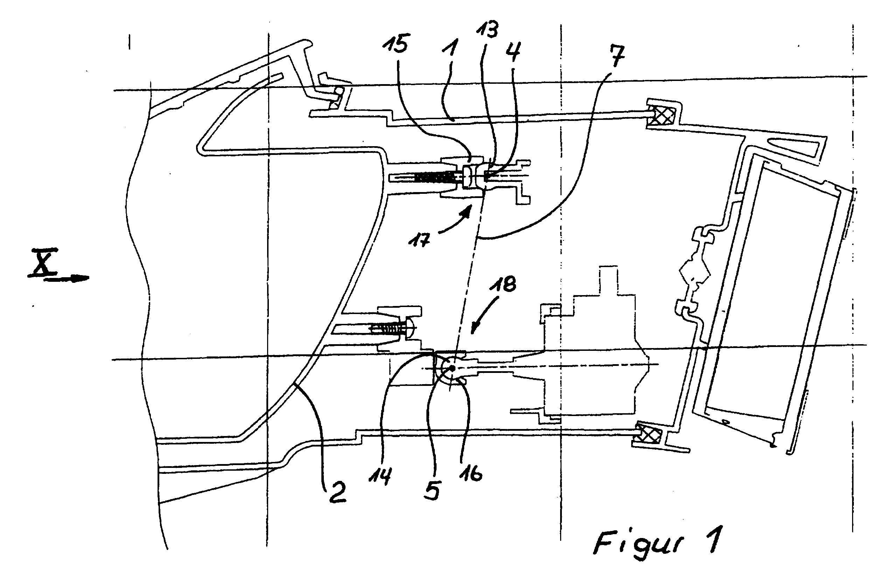

- Figur 1:: Eine Seitenansicht eines Scheinwerfers im Schnitt,

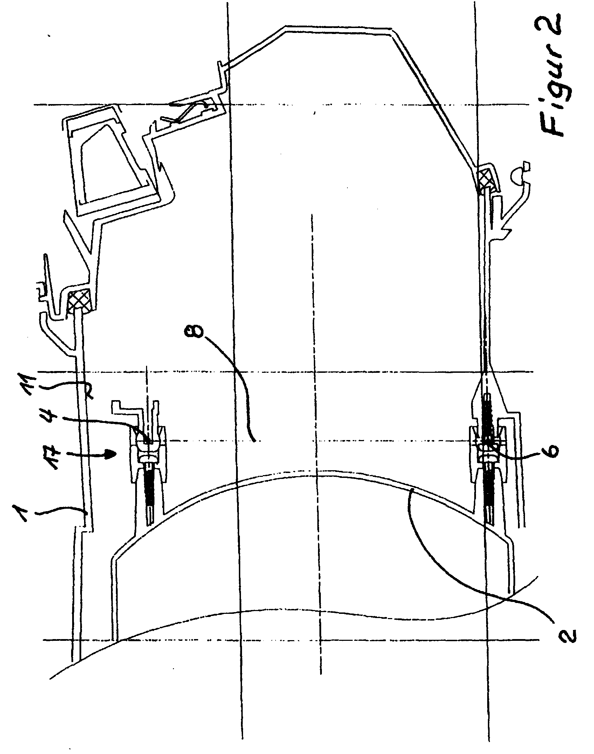

- Figur 2:: eine Draufsicht auf den Scheinwerfer von Figur 1 im Schnitt,

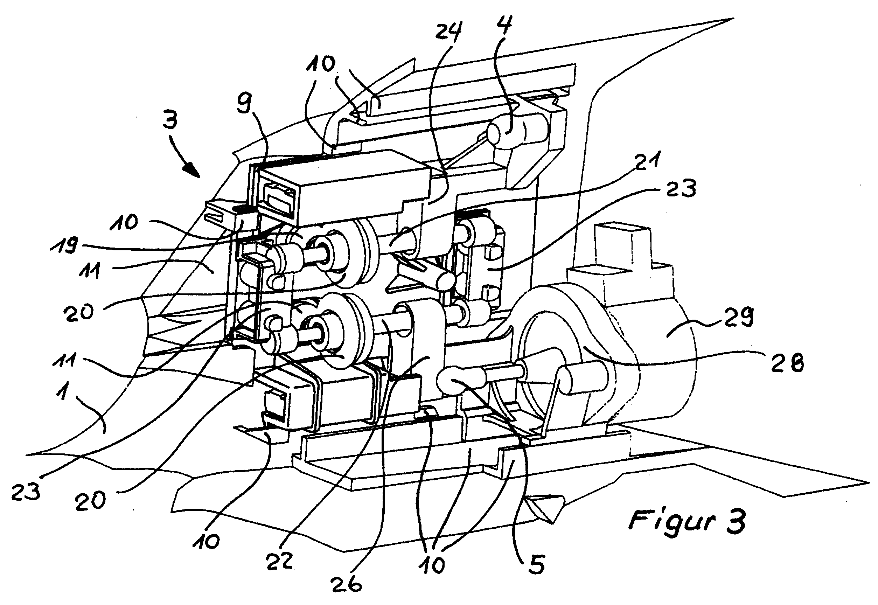

- Figur 3:: eine räumliche Darstellung eines Scheinwerfers mit Verstelleinheit ohne Reflektor,

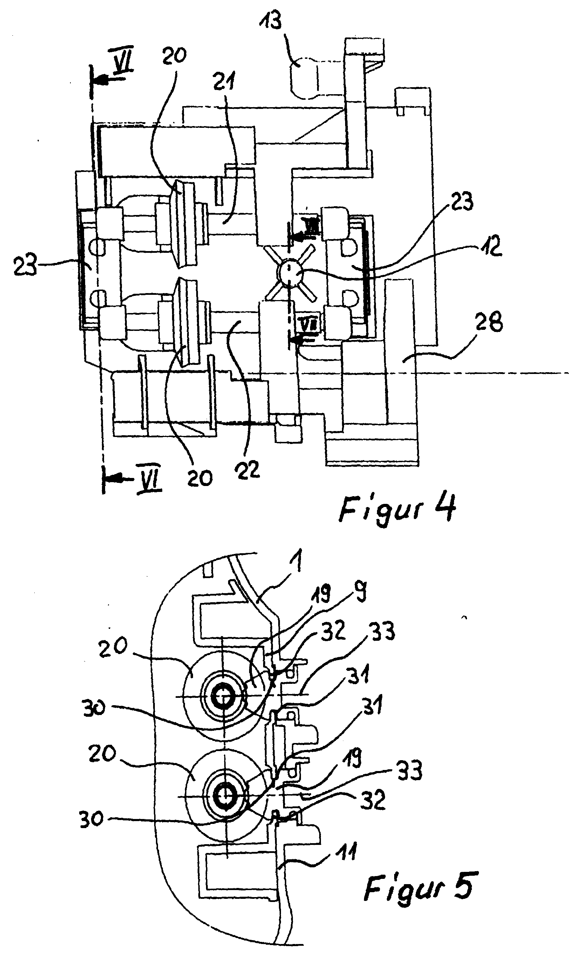

- Figur 4:: eine Seitenansicht der Verstelleinheit von Figur 3 ohne Leuchtweiteregler,

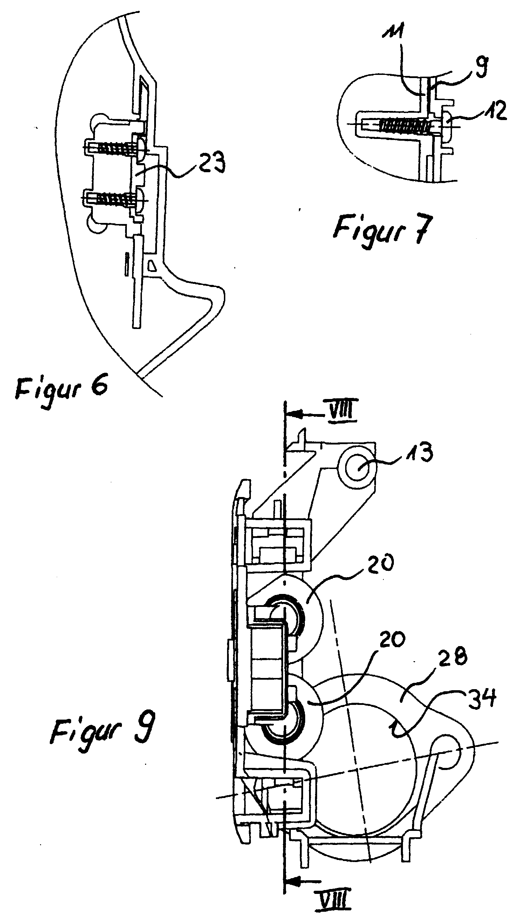

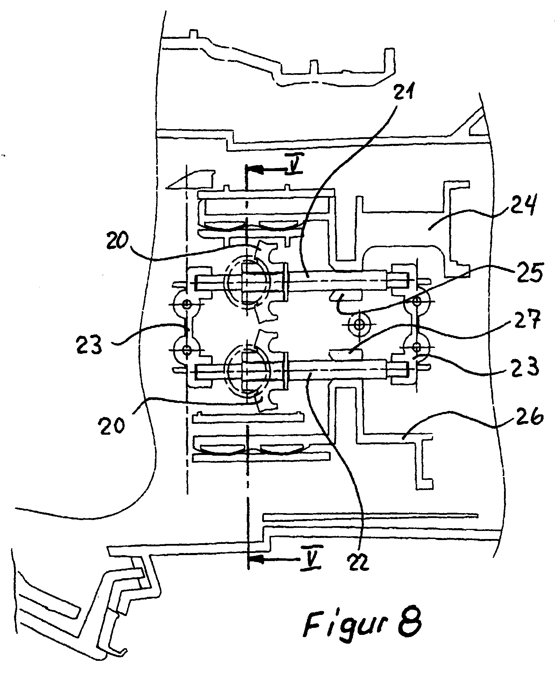

- Figur 5:: eine Vorderansicht der Verstelleinheit von Figur 8 entlang der Linie V - V geschnitten,
- Figur 6:: eine Vorderansicht der Verstelleinheit von Figur 4 entlang der Linie VI - VI geschnitten,
- Figur 7:: eine Vorderansicht der Verstelleinheit von Figur 4 entlang der Linie VII - VII geschnitten,

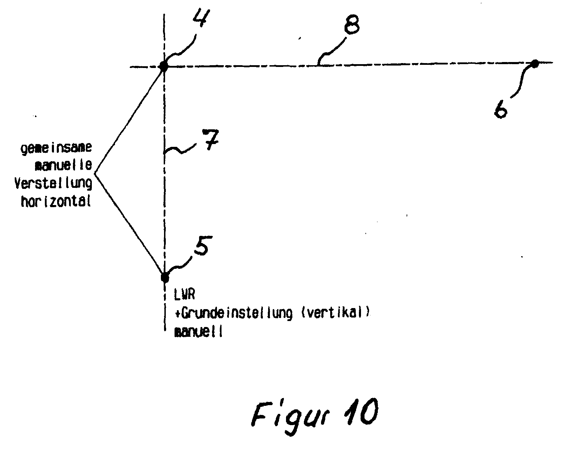

- Figur 8:: eine Seitenansicht der Verstelleinheit von Figur 9 entlang der Linie VIII - VIII geschnitten,
- Figur 9:: eine Vorderansicht der Verstelleinheit von Figur 4 aus Richtung IX, und
- Figur 10:: eine schematische Darstellung der Achsen mit angedeuteten Lagerpunkten des Reflektors von Figur 1 aus Richtung X gesehen.

Ein Scheinwerfer besteht im wesentlich aus einem Gehäuse 1, einem Reflektor 2 und einer Verstelleinheit 3.

Der Reflektor 2 ist in dem Gehäuse 1 in einem ersten manuell verstellbaren Lagerpunkt 4, einem zweiten manuell verstellbaren Lagerpunkt 5 und in einem dritten festen Lagerpunkt 6 verstellbar gelagert.

Der erste Lagerpunkt 4 ist im Schnittpunkt einer vertikalen Achse 7 und einer horizontalen Achse 9 angeordnet. Der zweite manuell verstellbare Lagerpunkt ist unterhalb der horizontalen Achse 8 in einem Abstand zu dem ersten manuell verstellbaren Lagerpunkt 4 auf der vertikalen Achse 7 angeordnet.

Der dritte feste Lagerpunkt 6 ist in einem Abstand zum ersten manuell verstellbaren Lagerpunkt 4 auf der horizontalen Achse 8 angeordnet.

Die manuell verstellbaren Lagerpunkte 4, 5 sind als Lagerpunkte der Verstelleinheit 3 ausgebildet.

Die Verstelleinheit 3 weist eine Grundplatte 9 auf, mit der sie über Fixierstege 10 an einer Seitenwandung 11 des Gehäuses positionierbar ist. Die Verstelleinheit 3 bzw. ihre Grundplatte 9 ist über eine Schraube 12 an der Seitenwandung 11 des Gehäuses 1 sicherbar bzw. festschraubbar. Die manuell verstellbaren Lagerpunkte 4, 5 sind als Kugelgelenke 13, 14 ausgebildet, die mit einer entsprechenden Gelenkpfanne 15, 16 des Reflektors 2 zu einem Gelenk 17, 18 verbindbar sind. Die Kugelgelenke 13, 14 sind über Einstellräder 19, die in Antriebsräder 20 von Schraubenspindeln 21, 22 eingreifen an ihren gegenüberliegenden Enden in Lagerböcken 23 gelagert.

Der erste manuell verstellbare Lagerpunkt 4 bzw. das erste Kugelgelenk 13 ist an einem ersten Einstellgelenk 24 angeordnet. Das erste Einstellgelenk 24 ist zu der ersten Schraubenspindel 21 längsverschieblich an der Grundplatte 9 gelagert und über einen ersten Gewindebock 25 mit der ersten Schraubenspindel 21 verbunden.

Der zweite manuell verstellbare Lagerpunkt 5 ist an einem zweiten Einstellgelenk 26 angeordnet. Das zweite Einstellgelenk 26 ist längsverschieblich zu der zweiten Schraubenspindel 22 an der Grundplatte 9 gelagert und über einen zweiten Gewindebock 27 mit der zweiten Schraubenspindel 22 verbunden.

Das zweite Einstellgelenk 26 weist eine Aufnahme 28 mit einer Aufnahmebohrung 34 für einen Leuchtweitenregler 29 auf, dessen Kugelgelenk 14 den zweiten Lagerpunkt 5 bildet.

Die Einstellräder 19 sind etwa rechtwinklig zu den Schraubenspindeln 21, 22 angeordnet und werden seitlich in Bohrungen 30 der Seitenwandung 11 des Gehäuses 1 geführt. Die Einstellräder 19 weisen auf ihrem Umfang Nuten 31 auf, in die Ansätze 32 der Grundplatte 9 seitlich eingreifen und diese in Richtung ihrer Längsachsen 33 positionieren.

Zur Montage wird die Verstelleinheit 3 mit ihrer Grundplatte 9 in die Fixierstege 10 eingeschoben und nach Einsetzen der Einstellräder 19 in ihre Endstellung gebracht, so daß die Ansätze 32 in die Nuten 31 der Einstellräder eingreifen. In der Endstellung wird die Grundplatte 3 mit der Schraube 12 an der Seitenwandung 11 festgeschraubt Der Reflektor 2 wird mit dem dritten festen Lagerpunkt 6 und dem ersten manuell verstellbaren Lagerpunkt 4 verbunden. Der zweite Lagerpunkt 5 als Kugelgelenk 14 des Leuchtweitereglers 29 wird mit der zweiten Gelenkpfanne 16 verrastet. Durch Drehen der Einstellräder 19 werden über die Antriebsräder 20 die Schraubenspindeln 21, 22 angetrieben und die Einstellgelenke 24, 26 in Längsrichtung der Schraubenspindeln 21, 22 verschoben.

Durch ein gemeinsames Verstellen der Einstellräder 19 bzw. der Einstellgelenke 24, 26 erfolgt eine horizontale Verstellung, d. h. ein Verschwenken des Reflektors 2 um die vertikale Achse 7 durch Verschieben des ersten und zweiten Lagerpunktes 4, 5. Durch Verstellen des zweiten Einstellgelenkes 26 bzw. des zweiten Lagerpunktes 5 erfolgt eine vertikale Verstellung, d. h. ein Verschwenken des Reflektors 2 um die horizontale Achse 8.

## Patentansprüche

1. Fahrzeugscheinwerfer mit einem um eine horizontale und um eine vertikale Achse in einem Gehäuse verschwenkbaren Reflektor, der in zwei auf einer Achse in einem Abstand zueinander angeordneten manuell verstellbaren Lagerpunkten und einem festen Lagerpunkt, der mit einem der manuell verstellbaren Lagerpunkte auf der anderen Achse angeordnet ist, gelagert wird, wobei die beiden manuell verstellbaren Lagerpunkte über Einstellräder, die mit auf Schraubenspindeln angeordneten Antriebsrädern verbindbar sind, verstellbar sind, dadurch gekennzeichnet, daß die manuell verstellbaren Lagerpunkte (4, 5) als Lagerpunkte einer Verstelleinheit (3) ausgebildet sind, die an dem Gehäuse (1) befestigbar ist.

2. Fahrzeugscheinwerfer nach Anspruch 1, dadurch gekennzeichnet, daß die Verstelleinheit (3) eine Grundplatte (9) aufweist, die über Fixierstege (10) an einer Seitenwandung (11) des Gehäuses (1) positionierbar ist.

3. Fahrzeugscheinwerfer nach Anspruch 1 oder 2, dadurch gekennzeichnet, daß die Verstelleinheit (3) durch eine Schraube (12) am Gehäuse (1) sicherbar ist.

4. Fahrzeugscheinwerfer nach einem der Ansprüche 1 bis 3, dadurch gekennzeichnet, daß die manuell verstellbaren Lagerpunkte (4, 5) als Kugelgelenke (13, 14) ausgebildet sind, die mit einer entsprechenden Gelenkpfanne (15, 16) des Reflektors (2) zu einem Gelenk (17, 18) verbindbar sind.

5. Fahrzeugscheinwerfer nach einem der Ansprüche 2 bis 4, dadurch gekennzeichnet, daß die Schraubenspindeln (21, 22) an ihren gegenüberliegenden Enden in an der Grundplatte (9) angeordneten Lagerböcken (23) gelagert werden.

6. Fahrzeugscheinwerfer nach einem der Ansprüche 2 bis 5, dadurch gekennzeichnet, daß ein erster verstellbarer Lagerpunkt (4) an einem ersten Einstellgelenk (24) angeordnet ist, daß zu einer ersten Schraubenspindel (21) längsverschieblich an der Grundplatte (9) gelagert und über eine ersten Gewindebock (25) mit der ersten Schraubenspindel (21) verbunden ist.

7. Fahrzeugscheinwerfer nach einem der Ansprüche 2 bis 6, dadurch gekennzeichnet, daß ein zweiter verstellbarer Lagerpunkt (5) an einem zweiten Einstellgelenk (26) angeordnet ist, das zu einer zweiten Schraubenspindel (22) längsverschieblich an der Grundplatte (9) gelagert und über einen zweiten Gewindebock (27) mit der zweiten Schraubenspindel (22) verbunden ist.

8. Fahrzeugscheinwerfer nach Anspruch 7, dadurch gekennzeichnet, daß das zweite Einstellgelenk (26) eine Aufnahme (28) für einen Leuchtweitenregler (29) aufweist, dessen Kugelgelenk (14) den zweiten verstellbaren Lagerpunkt (5) bildet.

9. Fahrzeugscheinwerfer nach einem der Ansprüche 2 bis 8, dadurch gekennzeichnet, daß die Grundplatte (9) Ansätze (32) aufweist, die in Nuten (31) der etwa senkrecht zu den Schraubenspindeln (21, 22) angeordneten Einstellrädern (19) eingreifen und diese in Richtung ihrer Längsachse (33) zu den Antriebsrädern (20) positionieren.

10. Fahrzeugscheinwerfer nach Anspruch 9, dadurch gekennzeichnet, daß die Einstellräder (19) seitlich in Bohrungen (30) der Seitenwandung (11) des Gehäuses (1) geführt werden.
